# EUROPÄISCHE PATENTANMELDUNG

(11) **EP 1 236 600 A2**
(43) Veröffentlichungstag der Anmeldung: **04.09.2002**
(21) Anmeldenummer: 02003102.7
(22) Anmeldetag: 13.02.2002
(51) Int. Cl.: B60J 7/00

(54) **Öffnungsfähiges Fahrzeugdach mit zwei transparenten Deckeln**

(30) Priorität: 01.03.2001 DE 10110013
(71) Anmelder: Webasto Vehicle Systems International GmbH, 82131 Stockdorf (DE)
(72) Erfinder: Schätzler, Walter, 82319 Starnberg (DE); Pfalzgraf, Manfred, 82211 Herrsching (DE)
(74) Vertreter: Wiese, Gerhard

(57) **Zusammenfassung**

Die Erfindung betrifft ein öffnungsfähiges Fahrzeugdach, das mit einem ersten (10) und einem zweiten transparenten Deckel (12) versehen ist, die in Schließstellung jeweils eine Dachöffnung verschließen und verstellbar sind, um die Dachöffnung mindestens zum Teil freizugeben, wobei unterhalb des ersten Dekkels eine erste (15) und unterhalb des zweiten Deckels eine zweite Abdeckeinrichtung (21) vorgesehen sind, die verstellbar sind, um die Sicht aus dem Fahrzeuginnenraum (28) auf den jeweiligen Deckel bzw. die Dachöffnung zu verdekken oder mindestens zum Teil freizugeben. Für das Verstellen des ersten Dekkels (10) und mindestens teilweise Verstellen der ersten Abdeckeinrichtung (15) ist ein gemeinsamer erster Antrieb (30, 32) sowie für das Verstellen des zweiten Deckels (12) und mindestens teilweise Verstellen der zweiten Abdeckeinrichtung (21) ist ein gemeinsamer zweiter Antrieb (34, 36, 38, 40) vorgesehen.

## Beschreibung

Die vorliegende Erfindung betrifft ein öffnungsfähiges Fahrzeugdach mit zwei transparenten Deckeln gemäß dem Oberbegriff von Anspruch 1.

Ein solches gattungsgemäßes Fahrzeugdach ist beispielsweise aus der DE 297 23 662 U1 bekannt, wo unter zwei in Dachlängsrichtung versetzt hintereinander angeordneten verschiebbaren bzw. ausstellbaren Deckeln je ein manuell zu verstellendes Rollo vorgesehen ist. Die von den Deckeln zu verschließenden Dachöffnungen sind durch einen Mittelsteg voneinander getrennt, in dessen Bereich die Wickelwellen der Rollos angeordnet sein können. Bei einer alternativen Ausgestaltung dieses bekannten Fahrzeugdaches kann auch mindestens eines der Rollos elektromotorisch betätigbar sein. Es finden sich jedoch keine Details bezüglich der Ausgestaltung und Anzahl der Antriebe für die Deckel und das bzw. die Rollos.

Aus der DE 197 50 715 C1 ist ein Fahrzeugdach bekannt, bei welchem ein verstellbarer transparenter Deckel und ein fester transparenter Deckel vorgesehen sind, welchen jeweils ein separates Rollo zugeordnet ist. Die beiden Rollos werden von einem gemeinsamen Antrieb über ein Antriebskabel verstellt, das die Auszugsspriegel der Rollos in Aufrollrichtung mitnimmt.

Aus der DE 195 00 367 C1 ist ein Fahrzeugdach bekannt, bei welchem ein einzelner Deckel und ein einzelnes Rollo vorgesehen sind, die von zwei separaten Antrieben angetrieben werden.

Aus der EP 0 150 470 B1 ist ein Fahrzeugdach mit einem einzelnen Deckel und einem einzelnen Schiebehimmel bekannt, wobei der Deckel mittels eines Antriebs, die ein drucksteifes Antriebskabel umfasst, ausstellbar ist. Beim Ausstellen des Deckels wird durch die Bewegung des freien Endes des Antriebskabels über eine Mitnehmereinrichtung der Schiebehimmel ein Stück weit geöffnet, um einen guten Luftaustausch in der Ausstellposition des Deckels zu ermöglichen. Ansonsten wird der Schiebehimmel manuell betätigt.

Aus der EP 0 185 193 B1 ist ein Fahrzeugdach mit einem einzelnen Deckel und einem einzelnen Schiebehimmel bekannt, wobei der Deckel mittels eines Antriebs, der ein drucksteifes Antriebskabel umfasst, das an einem Gleiter für den Deckel angreift, ausstellbar ist. Der Gleiter ist mit einer Zahnstange versehen, welche beim Ausstellen des Deckels mit einer Zahnradanordnung in Eingriff kommt und diese antreibt, welche ihrerseits mit einer Zahnstange in Eingriff kommt, die an dem in Schließstellung befindlichen Schiebehimmel ausgebildet ist. Auf diese Weise wird beim Ausstellen des Deckels der Schiebehimmel aus der Schließstellung ein Stück weit geöffnet. Die Zahnradanordnung kann mit einer Rastkupplung versehen sein, um auch bei ausgestelltem Deckel eine manuelle Verlagerung des Schiebehimmels zu ermöglichen. In der Schließstellung des Deckels ist der Schiebehimmel ohnehin manuell frei verschiebbar. Der Deckel ist ferner nach hinten schiebbar, um die Dachöffnung freizugeben, wobei ein Mitnehmer vorgesehen ist, um den Schiebehimmel bei dieser Bewegung nach hinten mitzunehmen.

Aus der DE 199 10 830 C1 ist eine Rolloanordnung für ein Fahrzeugdach bekannt, wobei das freie Ende der Rollobahn mittels eines über Umlenkrollen geführten Seils mit der Wickelwelle für die Rollobahn verbunden ist. Die Wickelwelle kann manuell oder elektrisch betätigbar sein.

Es ist Aufgabe der vorliegenden Erfindung, ein Fahrzeugdach mit einer großen freilegbaren Dachöffnungsfläche zu schaffen, wobei der Lichteinfall durch die Dachöffnungsfläche bei möglichst einfacher Bedienung variierbar sein soll und dennoch die Verstell- bzw. Antriebsmechanik des Fahrzeugdaches möglichst einfach ausgebildet sein soll.

Diese Aufgabe wird erfindungsgemäß gelöst durch ein Fahrzeugdach, wie es in Anspruch 1 bzw. 14 definiert ist.

Bei der Lösung gemäß Anspruch 1 ist vorteilhaft, dass nur zwei Antriebe erforderlich sind und dennoch die beiden Deckel unabhängig voneinander verstellt werden können und eine zumindest teilweise selbsttätige Verstellung der Abdeckeinrichtungen möglich ist. Auf diese Weise können Bauraum und Kosten eingespart werden, ohne dass der Bedienungskomfort zu sehr leiden würde.

Bei der Lösung gemäß Anspruch 14 ist vorteilhaft, dass nur zwei Antriebe erforderlich sind und dennoch sowohl die Deckel als auch die Abdeckeinrichtungen selbsttätig verstellt werden können.

Bevorzugte Ausgestaltungen der Erfindung ergeben sich aus den Unteransprüchen.

Im folgenden wird die Erfindung anhand der beigefügten Zeichnungen beispielhaft näher erläutert. Dabei zeigen:
- FIGN. 1 bis 6: schematisch eine Seitenansicht eines erfindungsgemäßen Fahrzeugdaches mit seiner ersten Ausführungsform in verschiedenen Stellungen;
- FIGN. 7 bis 13: Ansichten ähnlich zu FIGN. 1 bis 6, wobei jedoch eine zweite Ausführungsform eines Fahrzeugdaches dargestellt ist;
- FIGN. 14 bis 18: Ansichten ähnlich zu FIGN. 1 bis 6, wobei jedoch eine dritte Ausführungsform eines Fahrzeugdaches gezeigt ist; und
- FIGN. 19 bis 21: eine Aufsicht auf ein Fahrzeugdach gemäß der Ausführungsform von FIGN. 7 bis 13, wobei verschiedene Stellungen dargestellt sind.

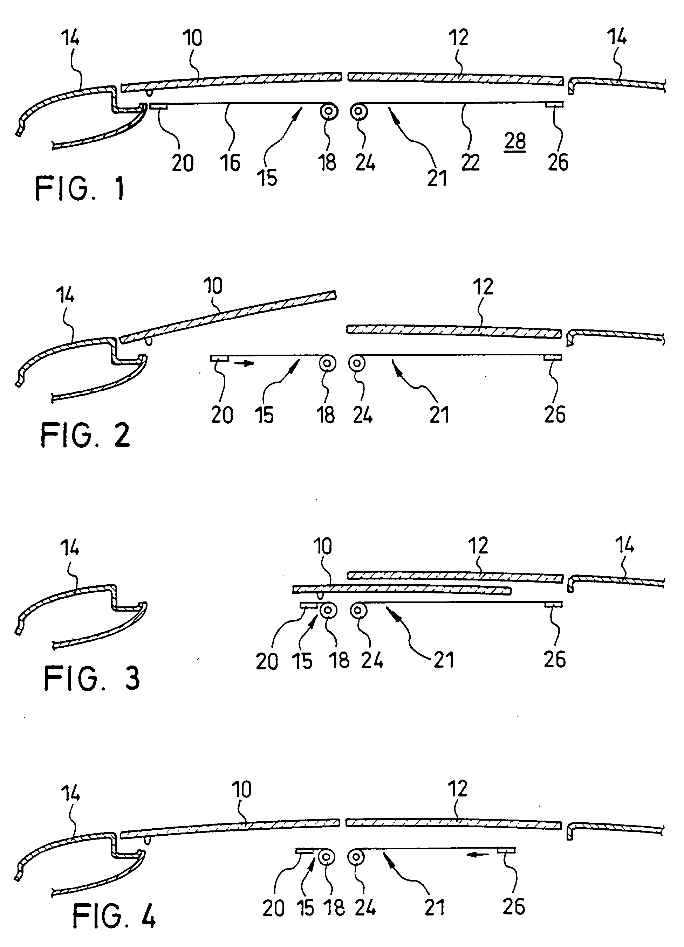

Gemäß FIGN. 1 bis 6 umfasst ein Fahrzeugdach gemäß einer ersten Ausführungsform zwei in Schließstellung (FIG. 1) hintereinander angeordnete Deckel 10 bzw. 12, welche in Schließstellung eine gemeinsame oder zwei durch einen Mittelsteg getrennte Dachöffnungen in einer festen Dachhaut 14 verschließen. Unterhalb des vorderen Deckels 10 ist ein vorderes Rollo 15 angeordnet, welches eine Rollobahn 16 umfasst, die auf eine im Bereich des hinteren Endes des vorderen Deckels 10 angeordnete in Dachquerrichtung verlaufende Wickelwelle 18 aufwickelbar ist. Am freien Ende der Rollobahn 16 ist ein Zugspriegel 20 vorgesehen. In ähnlicher Weise ist unterhalb des hinteren Deckels 12 ein hinteres Rollo 21 mit einer Rollobahn 22 vorgesehen, wobei die Wickelwelle 24 benachbart und parallel zu der Wickelwelle 18 des vorderen Rollos 15 angeordnet ist. Das freie, d.h. hintere Ende der Rollobahn 22 ist mit einem Zugspriegel 26 versehen. Die beiden Deckel 10 und 12 sind als transparente Deckel, vorzugsweise als Glasoder Kunststoffdeckel, ausgebildet. Das vordere Rollo 15 und das hintere Rollo 21 sind vorgesehen, um bei Bedarf die Deckel 10 und 12 bzw. die Dachöffnung mindestens zum Teil abzudecken, um einen übermäßigen Sonneneinfall in den Fahrzeuginnenraum 28 zu verhindern.

Das vordere Rollo 15 und das hintere Rollo 21 sind vorzugsweise wie in der DE 199 10 830 C1 als Rollo mit Umlenkrollen ausgebildet, wobei an dem Rollospriegel an beiden Seiten ein Seil angreift, welches über die entsprechenden Umlenkrollen zum seitlichen Randbereich der Wickelwelle läuft, wo es auf- bzw. abgewickelt wird. Diese Ausbildung des Rollos hat den Vorteil, dass sich der Verbund aus Rollobahn und Seilen im Kräftegleichgewicht befindet und somit einer Verschiebung eine konstante Gegenkraft entgegensetzt.

In der in FIG. 1 gezeigten Schließstellung lässt sich das vordere Rollo 15 manuell verschieben, um die gewünschte Sonneneinstrahlungsregulierung durch den vorderen Deckel 10 hindurch vorzunehmen.

Der vordere Deckel 10 ist mittels eines ihm zugeordneten Antriebs einerseits mittels einer entsprechenden Ausstellmechanik mit seiner Hinterkante ausstellbar und ist andererseits nach hinten unter den hinteren Deckel 12 schiebbar, wobei dies ebenfalls mittels des zugeordneten Antriebs erfolgt. Der Antrieb für den vorderen Deckel 10 umfasst üblicherweise mindestens ein und vorzugsweise zwei drucksteife Antriebskabel, welche über ein Ritzel von einem Elektromotor angetrieben werden und jeweils an einem Gleiter der Deckelverstellmechanik angreifen.

In FIG. 2 ist eine Stellung gezeigt, in welcher der vordere Deckel 10 mittels des zugeordneten Antriebs in die ausgestellte Stellung, d.h. mit angehobener Dekkelhinterkante, gebracht wurde. Der Antrieb ist dabei so ausgebildet, dass bei dieser Ausstellbewegung das vordere Rollo 15 mindestens ein Stück weit selbsttätig geöffnet wird, wie dies in FIG. 2 dargestellt ist, um eine ausreichende Luftströmung durch die so zum Teil freigelegte Dachöffnung zu ermöglichen. Die Antriebsmechanik kann dabei beispielsweise wie in der EP 0150 470 B1 ausgebildet sein, wo das freie Ende jedes Antriebskabels mittels einer Mitnehmereinrichtung beim Ausstellen des vorderen Deckels 10 den Spriegel 20 des vorderen Rollos 15 nach hinten bewegt.

Alternativ kann die Antriebsmechanik wie in der EP 0 185 993 B1 ausgebildet sein, wo der Gleiter der Ausstellmechanik, an welcher das jeweilige Antriebskabel angreift, seitlich mit einer Zahnstange versehen ist, welche beim Ausstellvorgang mit einer dachfest angebrachten Zahnradanordnung in Eingriff kommt und diese zu einer Drehbewegung antreibt, wobei die Zahnradanordnung wiederum mit einer im Bereich des Rollospriegels 20 seitlich angeordneten Zahnstange in Eingriff steht und auf diese Weise den Rollospriegel 20 des vorderen Rollos ein Stück weit nach hinten in die in FIG. 2 dargestellte Teilöffnungsstellung bewegt.

In beiden Fällen ist das vordere Rollo 15 bzw. der Rollospriegel 20 gegen eine Schließbewegung blockiert, solange der vordere Deckel 10 ausgestellt ist.

Aus der in FIG. 2 dargestellten Stellung kann der vordere Deckel 10 durch Absenken der Hinterkante wieder in die in FIG. 1 dargestellte Schließstellung gebracht werden, wobei je nach Ausbildung der Antriebsmechanik der Rollospriegel 20 selbsttätig nach vorne mitgenommen werden kann, um das Rollo 15 wieder zu schließen. Aus der Schließstelung von FIG. 1 kann der Deckel 10 durch leichtes Absenken seiner Hinterkante mittels des Antriebs nach hinten unter den hinteren Deckel 12 geschoben werden, bis die in FIG. 3 dargestellte Stellung erreicht ist. Bei dieser Öffnungsverschiebebewegung des Deckels 10 nimmt der Deckel 10 über eine entsprechend ausgebildete Mitnehmereinrichtung, wie sie beispielsweise aus der EP 0 185 993 B1 bekannt ist, den Rollospriegel 20 und damit die Rollobahn 16 des vorderen Rollos 15 nach hinten mit, bis das Rollo 15 ebenfalls vollständig geöffnet ist.

Beim Schließen des vorderen Deckels 10 läuft der beschriebene Vorgang umgekehrt ab, d.h. der vordere Deckel 10 nimmt über die Mitnehmereinrichtung den Rollospriegel 20 nach vorne in die Schließstellung mit.

Durch die beschriebene Ausgestaltung des dem vorderen Deckel 10 zugeordneten Antriebs kann das vordere Rollo 15 mindestens zum Teil selbsttätig entsprechend der Deckelstellung in zweckmäßiger Weise verstellt werden, wobei insbesondere bei einer bestimmten Deckelöffnung eine entsprechende Rolloöffnung erfolgt. Dies erhöht gegenüber einem rein manuell betätigten Rollo den Bedienkomfort, ohne dass ein zusätzlicher Antrieb für das Rollo erforderlich wäre.

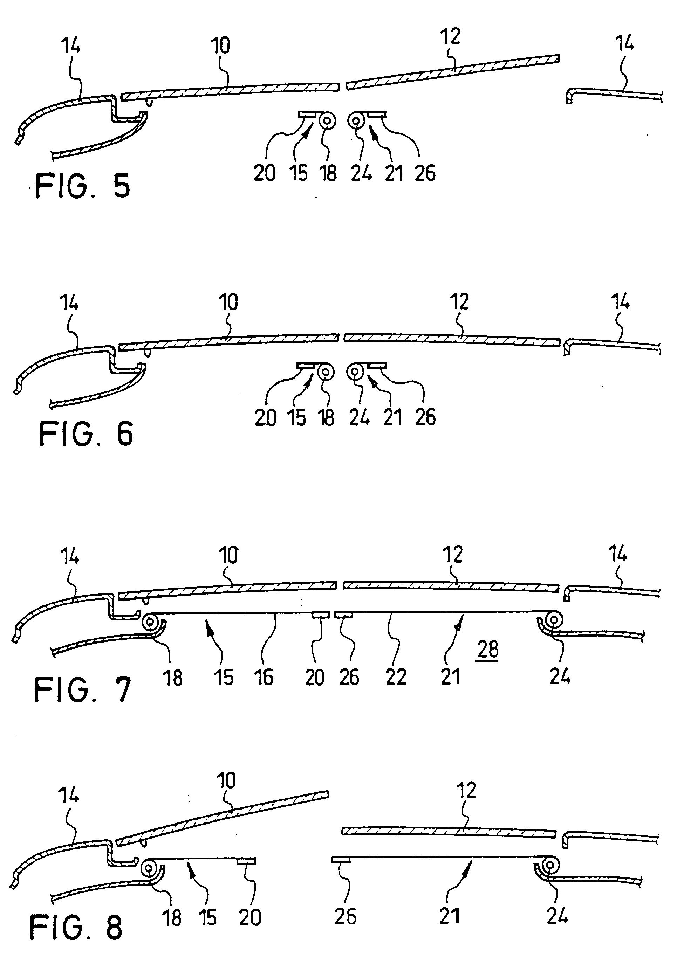

Der hintere Deckel 12 ist nur mit einer Ausstellfunktion, jedoch nicht mit einer Schiebefunktion versehen und wird von einem zweiten Antrieb angetrieben, der ebenfalls vorzugsweise einen ein Ritzel antreibenden Elektromotor und zwei von dem Ritzel angetriebene drucksteife Antriebskabel umfasst, welche an einem Gleiter der Deckelmechanik angreifen. In FIG. 4 ist eine Stellung dargestellt, in welcher der vordere Deckel 10 und der hintere Deckel 12 geschlossen sind, während das vordere Rollo 15 geöffnet ist und das hintere Rollo 21 mittels des dem hinteren Deckel 12 zugeordneten Antriebs nach vorne geöffnet wird. Dabei ist ein Mitnehmer an dem angetriebenen Gleiter vorgesehen, welcher den Rollospriegel 26 des hinteren Rollos 21 mitnimmt. Bevor das hintere Rollo 21 vollständig geöffnet ist, bewirkt die Antriebsbewegung des Gleiters noch keine Betätigung des Ausstellmechanismus des hinteren Deckels 12. Wenn die vollständige Öffnung des hinteren Rollos 21 erreicht ist, klinkt sich der Gleiter selbsttätig bezüglich des Rollospriegels 26 aus, wobei dieser mittels eines Riegelsteins in der Öffnungsstellung verriegelt wird. Anschließend klinkt sich der Gleiter in den Ausstellmechanismus des hinteren Deckels 12 ein, welcher bisher mit einem Riegelstein verriegelt war, und bewirkt eine Ausstellbewegung des hinteren Deckels 12, wobei seine Hinterkante angehoben wird, siehe FIG. 5. Wenn der Deckel 12 aus dieser Stellung wieder in seine Schließstellung abgesenkt wurde, klinkt sich der Gleiter aus dem Ausstellmechanismus des Deckels 12 aus, wobei eine Verriegelung des Deckels 12 mittels des Riegelsteins bewirkt wird. Anschließend klinkt sich der Gleiter wieder in den Rollospriegel 26 ein, wodurch dieser entriegelt wird und zu einer Schließbewegung mitgenommen wird, siehe FIG. 6.

Bei der beschriebenen Ausgestaltung des dem hinteren Deckel 12 zugeordneten Antriebs durch Bereitstellung nur eines gemeinsamen Antriebs können der hintere Deckel 12 und das hintere Rollo 21 in bequemer Weise vollständig motorisch verstellt werden, ohne dass ein zusätzlicher Antrieb erforderlich wäre, was Einsparungen vor allem bezüglich Bauraum und Kosten ermöglicht. Bei geschlossenem hinteren Deckel 12 kann das Rollo 21 in beliebiger Weise mittels Betätigung des Antriebs motorisch verstellt werden. Ein Ausstellen des hinteren Deckels 12 ist nur bei vorher vollständig geöffnetem Rollo 21 möglich.

In den FIGN. 7 bis 13 ist eine abgewandelte Ausführungsform des Fahrzeugdaches dargestellt, wobei der wesentliche Unterschied darin besteht, dass die Wikkelwellen 18 und 24 des vorderen Rollos 15 bzw. des hinteren Rollos 21 nicht im Mittelbereich des Daches zwischen den beiden Deckeln 10, 12 angeordnet sind, sondern im vorderen Endbereich des vorderen Deckels 10 bzw. im hinteren Endbereich des hinteren Deckels 12. Die Funktionalität bzw. Betätigung des Fahrzeugdaches ist abgesehen von diesem Unterschied, der zu einer Umkehrung der Öffnungs- bzw. Schließrichtung der Rollos 15 und 21 führt, dieselbe wie bei der Ausführungsform gemäß FIGN. 1 bis 6.

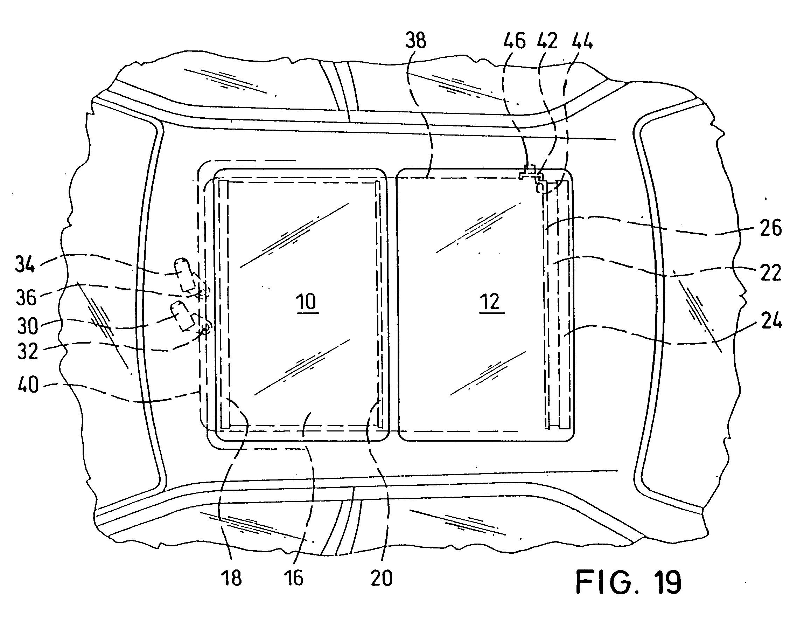

Die FIGN. 19 bis 21 zeigen verschiedene Stellungen des Antriebs für den hinteren Deckel bzw. das hintere Rollo in Aufsicht. Gemäß den FIGN. 19 bis 21 sind im vorderen Endbereich des Daches die beiden Antriebe für den vorderen Deckel 10 bzw. den hinteren Deckel 12 angeordnet, wobei der Antrieb für den vorderen Deckel 10 einen Antriebsmotor 30 mit Ritzel 32 und zwei nicht dargestellte Antriebskabel umfasst und der Antrieb für den hinteren Deckel 12 einen danebenliegend angeordneten Motor 34 mit Ritzel 36 und zwei drucksteifen Antriebskabeln 38 bzw. 40 umfasst.

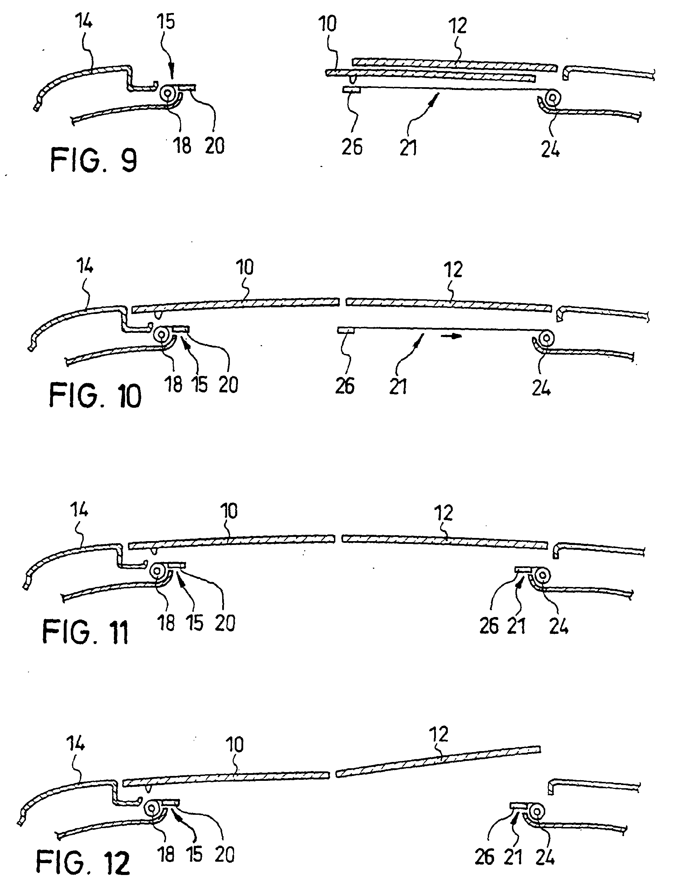

Gemäß FIG. 19 greift das Antriebskabel 38 mit einem Ende an einem in Dachlängsrichtung verschiebbar geführten Gleiter 42 an, der in der Stellung gemäß FIG. 19 über einen Mitnehmer 46 mit der Ausstellmechanik des hinteren Deckels 12 gekoppelt ist und diesen in die ausgestellte Position gemäß FIG. 12 gebracht hat. Das hintere Rollo 21 ist in dieser Stellung vollständig geöffnet, d.h. der Rollospriegel 26 befindet sich in der Nähe der Wickelwelle 24 im Bereich des hinteren Endes der Dachöffnung.

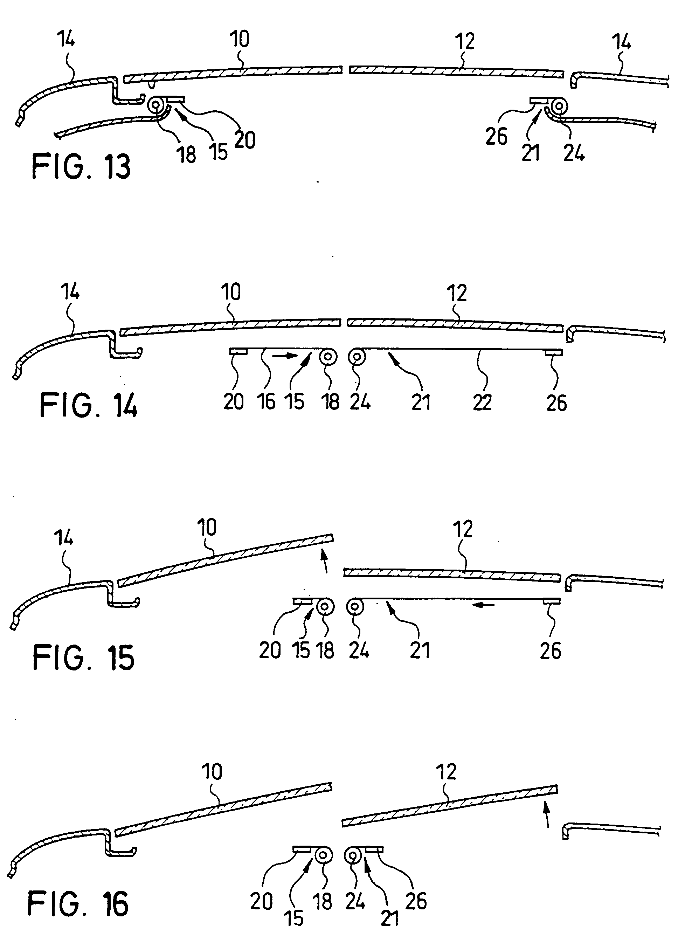

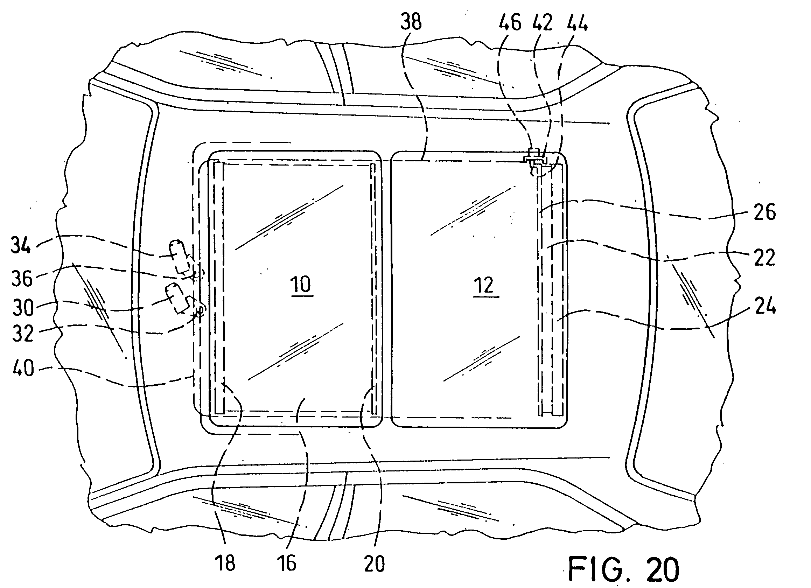

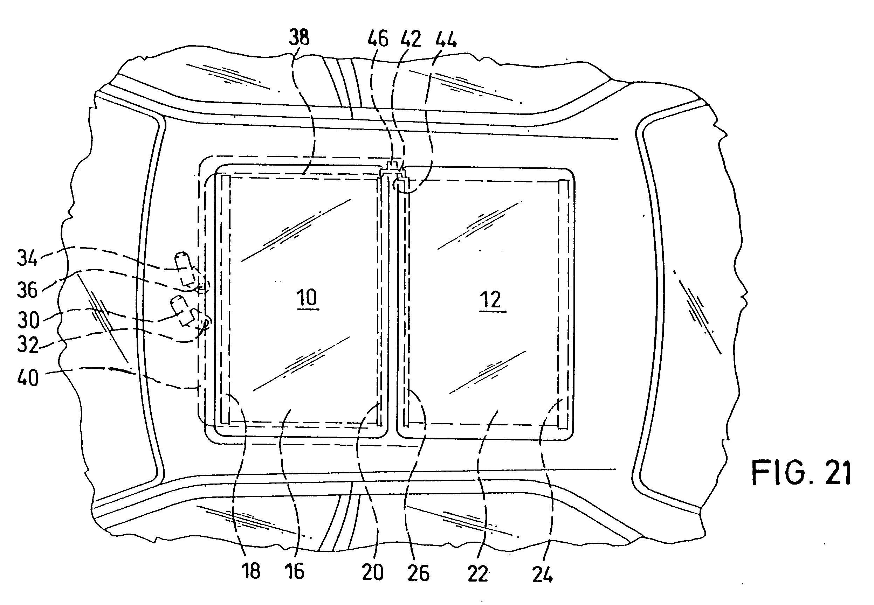

Durch Betätigung des Motors 34 wurde das Antriebskabel 38 in FIG. 20 ein Stück nach vorne bewegt, wodurch die Deckelmechanik so betätigt wurde, dass der Deckel 12 in die in FIG. 13 dargestellte Schließstellung gebracht wurde. Der Gleiter 42 ist nun von der Deckelmechanik entkoppelt und greift nun in einen Mitnehmer 44 ein, der seitlich an dem Rollospriegel 26 vorgesehen ist, wodurch bei weiterer Betätigung des Motors 34 der Rollospriegel 26 nach vorn bewegt wird, um das Rollo 21 zu schließen. Dabei wird am Ende die in FIG. 21 dargestellte Stellung erreicht, die der in den FIGN. 7 bis 9 dargestellten Schließstellung des hinteren Deckels 12 und des hinteren Rollos 21 entspricht. In den FIGN. 19 bis 21 ist nur das Antriebskabel 38 im Detail dargestellt; das Antriebskabel 40 ist jedoch ähnlich ausgebildet.

In den FIGN. 14 bis 18 ist eine dritte Ausführungsform dargestellt, wobei hier ein gemeinsamer Antrieb für beide Deckel 10, 12 und ein davon getrennter gemeinsamer Antrieb für beide Rollos 15, 21 zuständig ist.

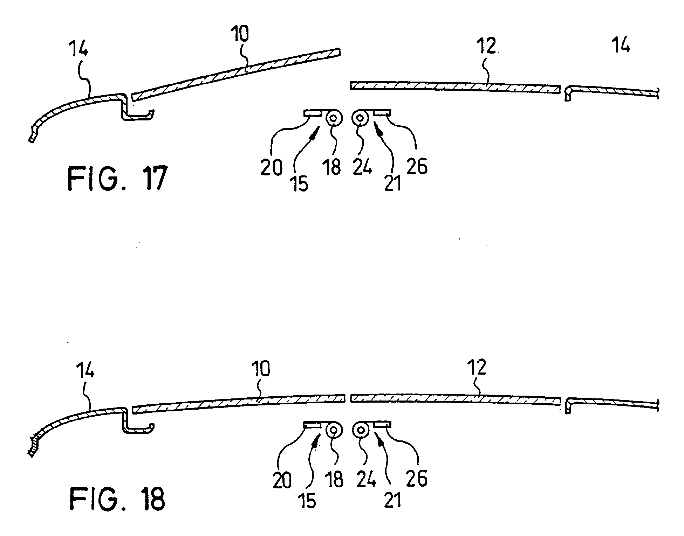

Die Abfolge der Öffnungsbewegungen ergibt sich dabei aus der Reihenfolge der FIGN. 14 bis 18. Ausgehend von der in FIG. 14 dargestellten Schließstellung kann durch Betätigung des Rolloantriebs das vordere Rollo 15 ganz oder teilweise geöffnet werden. Gemäß FIG. 15 kann bei vollständig geöffnetem vorderen Rollo 15 dann der vordere Deckel 10 ausgestellt werden. Das hintere Rollo 21 kann dann durch weitere Betätigung des Rollomotors ebenfalls teilweise oder ganz geöffnet werden. Wenn das hintere Rollo 21 vollständig geöffnet ist, kann gemäß FIG. 16 auch der hintere Deckel 12 durch Betätigung des Deckelantriebs ausgestellt werden. Ausgehend von dieser Stellung kann durch weitere Betätigung des Deckelantriebs der hintere Deckel 12 wieder abgesenkt werden, siehe FIG. 17. Anschließend kann auch der vordere Deckel 10 mittels Betätigung des Deckelantriebs wieder abgesenkt werden, um die in FIG. 18 dargestellte Stellung zu erreichen, in welcher die Deckel 10 und 12 geschlossen sind, während die Rollos 15 und 21 vollständig geöffnet sind.

Die Wickelwellen 18 und 24 sind wie bei der Ausführungsform gemäß FIGN. 1 bis 6 im mittleren Dachbereich, d.h. im Bereich zwischen den beiden Deckeln 10 und 12, angeordnet.

Im Unterschied zu den Ausführungsformen gemäß den FIGN. 1 bis 13 ist der vordere Deckel 10 nur ausstellbar, nicht jedoch unter den hinteren Deckel 12 verschiebbar.

Der Antrieb für die Deckel und der Antrieb für die Rollos können so gekoppelt sein, dass ein Ausstellen der Deckel jeweils erst möglich ist, wenn zuvor das entsprechende Rollo mindestens teilweise geöffnet wurde.

Statt zum Abdecken der Deckel Rollos zu verwenden, können statt der beschriebenen Rollos funktional entsprechende Schiebehimmel vorgesehen sein, die in gleicher Weise geöffnet bzw. geschlossen werden.

Die vorliegende Erfindung erlaubt durch das Vorsehen von nur zwei Antrieben bei dennoch erheblichem Benutzerkomfort die Einsparung von zusätzlichen Antriebsmitteln, wobei insbesondere Bauraum, Führungsrohre, Elektronikkomponenten sowie Positionsgeber zur Steuerung eingespart werden können. Ferner kann der Durchsichtsbereich des Daches vergrößert werden.

## Patentansprüche

1. Öffnungsfähiges Fahrzeugdach mit einem ersten (10) und einem zweiten transparenten Deckel (12), die in Schließstellung jeweils eine Dachöffnung verschließen und verstellbar sind, um die Dachöffnung mindestens zum Teil freizugeben, wobei unterhalb des ersten Deckels eine erste (15) und unterhalb des zweiten Deckels eine zweite Abdeckeinrichtung (21) vorgesehen sind, die verstellbar sind, um die Sicht aus dem Fahrzeuginnenraum (28) auf den jeweiligen Deckel bzw. die Dachöffnung zu verdecken oder mindestens zum Teil freizugeben, **dadurch gekennzeichnet, dass** für das Verstellen des ersten Deckels (10) und mindestens teilweise Verstellen der ersten Abdeckeinrichtung (15) ein gemeinsamer erster Antrieb (30, 32) sowie für das Verstellen des zweiten Deckels (12) und mindestens teilweise Verstellen der zweiten Abdeckeinrichtung (21) ein gemeinsamer zweiter Antrieb (34, 36, 38, 40) vorgesehen ist.

2. Fahrzeugdach nach Anspruch 1, **dadurch gekennzeichnet, dass** die zweite Abdeckeinrichtung (21) vollständig von dem zweiten Antrieb (34, 36, 38, 40) verstellbar ist.

3. Fahrzeugdach nach Anspruch 2 **dadurch gekennzeichnet, dass** er zweite Deckel (12) mittels einer Ausstellmechanik mit seiner Hinterkante ausstellbar ist und der zweite Antrieb (34, 36, 38, 40) so ausgebildet ist, dass bei geschlossenem zweiten Deckel die zweite Abdeckeinrichtung (21) mittels des zweiten Antriebs wahlweise geöffnet oder geschlossen werden kann.

4. Fahrzeugdach nach Anspruch 3, **dadurch gekennzeichnet, dass** er zweite Antrieb (34, 36, 38, 40) so ausgebildet ist, dass vor dem Ausstellen des zweiten Deckels (12) die zweite Abdeckeinrichtung (21) von dem zweiten Antrieb mindestens zum Teil, vorzugsweise vollständig, geöffnet und in dieser Stellung gehalten wird.

5. Fahrzeugdach nach Anspruch 4, **dadurch gekennzeichnet, dass** nach dem Öffnen der zweiten Abdeckeinrichtung (21) vor dem Ausstellen des zweiten Deckels (12), der sich in der verriegelten Schließstellung befindet, die zweite Abdeckeinrichtung von dem zweiten Antrieb (34, 36, 38, 40) getrennt und selbsttätig in der Öffnungsstellung verriegelt wird, die Verriegelung des zweiten Deckels selbsttätig gelöst wird und der zweite Antrieb selbsttätig mit der Ausstellmechanik des zweiten Deckel verbunden wird, um den zweiten Deckel auszustellen.

6. Fahrzeugdach nach Anspruch 5, **dadurch gekennzeichnet, dass** nach dem Schließen des zweiten Deckels (12) die Ausstellmechanik des zweiten Dekkels selbsttätig von dem zweiten Antrieb (34, 36, 38, 40) getrennt und in der Schließstellung verriegelt wird und die zweite Abdeckeinrichtung selbsttätig entriegelt und mit dem zweiten Antrieb verbunden wird.

7. Fahrzeugdach nach einem der vorhergehenden Ansprüche, **dadurch gekennzeichnet, dass** die erste Abdeckeinrichtung (15) in Abhängigkeit von der Stellung des ersten Deckels (10) manuell oder von dem ersten Antrieb (30, 32) verstellbar ist.

8. Fahrzeugdach nach Anspruch 7, **dadurch gekennzeichnet, dass** der erste Deckel (10) mit seiner Hinterkante ausstellbar ist und der erste Antrieb (30, 32) so ausgebildet ist, dass bei der Ausstellbewegung des ersten Deckels die erste Abdeckeinrichtung (15) mindestens zum Teil geöffnet wird, wobei der erste Antrieb bei ausgestelltem ersten Deckel ein manuelles Schließen der ersten Abdeckeinrichtung verhindert.

9. Fahrzeugdach nach Anspruch 8, **dadurch gekennzeichnet, dass** der erste Deckel (10) von mindestens einem drucksteifen Antriebskabel angetrieben wird, wobei die Bewegung des freien Endes des Antriebskabels bei der Ausstellbewegung des ersten Deckels die erste Abdeckeinrichtung (15) mindestens zum Teil öffnet.

10. Fahrzeugdach nach Anspruch 8, **dadurch gekennzeichnet, dass** an einem Antriebschlitten des ersten Deckels (10) eine Zahnstange vorgesehen ist, welche bei der Ausstellbewegung des ersten Deckels durch Eingriff mit einem dachfesten Ritzel, welches seinerseits mit einer Zahnstange an der ersten Abdeckeinrichtung in Eingriff steht, die erste Abdeckeinrichtung (15) mindestens zum Teil öffnet.

11. Fahrzeugdach nach einem der vorhergehenden Ansprüche, **dadurch gekennzeichnet, dass** der erste Deckel (10) mittels des ersten Antriebs (30, 32) nach hinten verschiebbar ist, um die Dachöffnung freizugeben.

12. Fahrzeugdach nach Anspruch 11, **dadurch gekennzeichnet, dass** der erste Deckel (10) die erste Abdeckeinrichtung (15) mittels eines Mitnehmers nach hinten in eine Öffnungsstellung mitnimmt und dort hält.

13. Fahrzeugdach nach einem der Ansprüche 7 bis 12, **dadurch gekennzeichnet, dass** die erste Abdeckeinrichtung (15) bei geschlossenem ersten Dekkel (10) manuell verstellbar ist.

14. Öffnungsfähiges Fahrzeugdach mit einem ersten (10) und einem zweiten Deckel (12), die in Schließstellung jeweils eine Dachöffnung verschließen und verstellbar sind, um die Dachöffnung mindestens zum Teil freizugeben, wobei unterhalb des ersten Deckels eine erste (15) und unterhalb des zweiten Deckels eine zweite Abdeckeinrichtung (21) vorgesehen sind, die verstellbar sind, um die Sicht aus dem Fahrzeuginnenraum (28) auf den jeweiligen Deckel bzw. die Dachöffnung zu verdecken oder mindestens zum Teil freizugeben, **dadurch gekennzeichnet, dass** für das Verstellen des ersten Deckels (10) und des zweiten Deckels (12) ein gemeinsamer erster Antrieb sowie für das Verstellen der ersten (15) und der zweiten Abdeckeinrichtung (21) ein gemeinsamer zweiter Antrieb vorgesehen ist.

15. Fahrzeugdach nach Anspruch 14, **dadurch gekennzeichnet, dass** der erste (10) und der zweite Deckel (12) mit ihrer Hinterkante ausstellbar sind.

16. Fahrzeugdach nach Anspruch 15, **dadurch gekennzeichnet, dass** bei geschlossenem ersten (10) und zweiten Deckel (12) die erste (15) und die zweite Abdeckeinrichtung (21) mittels des zweiten Antriebs wahlweise geöffnet bzw. geschlossen werden können.

17. Fahrzeugdach nach Anspruch 16, **dadurch gekennzeichnet, dass** vor dem Ausstellen des ersten (10) bzw. zweiten Deckels (12) die erste (15) bzw. zweite Abdeckeinrichtung (21) von dem zweiten Antrieb mindestens zum Teil, vorzugsweise vollständig, geöffnet und in dieser Stellung gehalten wird.

18. Fahrzeugdach nach Anspruch 17, **dadurch gekennzeichnet, dass** der erste Antrieb so ausgebildet ist, dass aus der Schließstellung beider Deckel (10, 12) zuerst der erste Deckel (10) und anschließend der zweite Deckel (12) ausgestellt werden können, wobei beim Schließen ausgehen von dieser Stellung zuerst der zweite und dann der erste Deckel geschlossen werden können.

19. Fahrzeugdach nach einem der vorhergehenden Ansprüche, **dadurch gekennzeichnet, dass** der erste Deckel (10) in Fahrzeuglängsrichtung vor dem zweiten Deckel (12) angeordnet ist.

20. Fahrzeugdach nach einem der vorhergehenden Ansprüche, **dadurch gekennzeichnet, dass** die erste (15) und die zweite Abdeckeinrichtung (21) jeweils als Rolloanordnung ausgebildet sind, bei welcher eine Rollobahn (16, 22) auf eine Wickelwelle (18, 24) aufwickelbar ist.

21. Fahrzeugdach nach Anspruch 21, **dadurch gekennzeichnet, dass** jede Wickelwelle (18, 24) über Seile mit einer zu der Wickelwelle parallel angeordneten Umlenkrolle in Antriebsverbindung steht.

22. Fahrzeugdach nach Anspruch 20 oder 21, **dadurch gekennzeichnet, dass** die beiden Wickelwellen (18, 24) in dem Bereich zwischen den beiden Dekkeln (10, 12) angeordnet sind.

23. Fahrzeugdach nach Anspruch 21 oder 22, **dadurch gekennzeichnet, dass** die Wickelwelle (18) der ersten Rolloanordnung (15) im vorderen Endbereich des ersten Deckels (10) und die Wickelwelle (24) der zweiten Rolloanordnung (21) im hinten Endbereich des zweiten Deckels (12) angeordnet sind.
